# EUROPÄISCHE PATENTSCHRIFT

(11) **EP 2 578 797 B1**
(45) Veröffentlichungstag und Bekanntmachung des Hinweises auf die Patenterteilung: **03.05.2017**
(21) Anmeldenummer: 11008154.4
(22) Anmeldetag: 07.10.2011
(51) Int. Cl.: E21B 19/14, E21B 19/15, E21B 44/00, E21B 19/20

(54) **Verfahren zum Verwalten von Bohrgestängen, Bohrwerkzeugen, Bohrloch-Verrohrungen und dergleichen für Erdbohrungen**
Method for managing drilling rods, drilling tools, borehole piping and the like for boreholes
Procédé de gestion de tiges de forage, outils de forage, colonnes de cuvelage pour trous de forage et analogues destinés à des puits de forage

(43) Veröffentlichungstag der Anmeldung: 10.04.2013
(73) Patentinhaber: KEURO Besitz GmbH & Co. EDV-Dienstleistungs KG, 77855 Achern (DE)
(72) Erfinder: Hacker, Christian, 77880 Sasbach (DE)
(74) Vertreter: Lemcke, Brommer & Partner Patentanwälte Partnerschaft mbB

(56) Entgegenhaltungen:
- EP-A1- 0 415 265
- WO-A2-2011/018614
- WO-A2-2011/120627
- DE-A1- 3 333 584
- GB-A- 2 472 929
- US-A- 4 042 123
- US-A- 4 725 179
- US-A1- 2005 080 509
- US-A1- 2007 124 220
- US-A1- 2010 104 401
- US-A1- 2010 239 404
- US-B1- 6 550 547
- B.J. KENNETT ET AL: "The Design of an Automated Drilling Rig: RA-D", PROCEEDINGS OF SPE/IADC DRILLING CONFERENCE, 1. Januar 1991 (1991-01-01), XP55018665, DOI: 10.2523/21921-MS

## Beschreibung

Die Erfindung betrifft ein Verfahren zum Verwalten von Bohrgestängen, Bohrwerkzeugen, Bohrloch-Verrohrungen und dergleichen für Erdbohrungen, insbesondere zum Erschließen von Lagerstätten fossiler Brennstoffe oder von Erdwärmespeichern.

Zum Erkunden und Erschließen von Erdöl- und Erdgasfeldern sind in der Regel Erdbohrungen mit erheblichen Bohrtiefen notwendig, da die Bohrungen in tieferliegende Gesteinsschichten vordringen müssen oder Off-Shore gearbeitet werden muss. Das Gleiche gilt für Bohrungen, um beispielsweise natürliche Warmwasserspeicher für die Energiegewinnung zu nutzen oder CO₂-Lagerstätten zu erschließen.

In all diesen Fällen wird der Bohrvortrieb durch einen Bohrmeißel oder dergleichen erzeugt, der an der Spitze eines Bohrstrangs sitzt, wobei der Bohrstrang aus einem Bohrgestänge oder aus zusammengesetzten Bohrrohren besteht und mit zunehmendem Bohrvortrieb immer länger wird. Der Antrieb des Bohrmeißels oder eines sonstigen Bohrwerkzeuges erfolgt hierbei von der Erdoberfläche oder gegebenenfalls von einer Bohrinsel, also von der Wasseroberfläche aus, wobei entweder der Bohrstrang zur mechanischen Übertragung der Bohrkräfte dient, oder eine Bohrflüssigkeit in das Bohrloch gepumpt wird, welche den Bohrmeißel hydraulisch antreibt. In aller Regel besteht der Bohrstrang aus Stahlrohren als Bohrgestänge, so dass das beim Bohren entstehende Bohrklein mittels eines durch das Bohrgestänge geleiteten Fluids nach oben aus dem Bohrloch ausgefördert werden kann. Oft wird koaxial zum Bohrgestänge eine Bohrloch-Verrohrung zum Auskleiden des Bohrlochs eingebracht.

Um den mit zunehmendem Bohrfortschritt immer länger werdenden Bohrstrang in das Bohrloch einzubringen, werden in der Nähe des Bohrlochs Bohrgestängeteile, Verrohrungsteile und dergleichen von jeweils typischerweise 12-20 m Länge vorgehalten und sukzessive in das Bohrloch eingebracht, wobei jedes neue in das Bohrloch einzubringende Teil am jeweils vorangehenden Teil befestigt wird. Letzteres erfolgt üblicherweise mittels Schraubgewinden an den Enden der Teile.

Erdbohrungen beginnen normalerweise in vertikaler Richtung, so dass in der Regel ein Bohrturm errichtet wird, der die einzelnen Gestängeteile und dergleichen vertikal in das Bohrloch ablässt. Ein Pipehandler sorgt für das automatisierte Ergreifen von horizontal orientierten Bohrgestängeteilen, Verrohrungsteilen etc. und zum Verschwenken der ergriffenen Teile in eine vertikale Lage oberhalb des Bohrlochs, wo es von einer Bohrloch-Beschickungseinrichtung am Bohrturm übernommen wird.

Je länger der Bohrstrang werden soll, um so wichtiger ist es, die Zeit zum Bereitstellen und Einbringen der einzelnen in das Bohrloch einzubringenden Teile möglichst kurz zu halten. Denn die Zeit für das Teilehandling innerhalb des Zeitraums des Gesamt-Bohrfortschritts wird dadurch vervielfacht, dass es von Zeit zu Zeit notwendig ist, den gesamten Bohrstrang aus dem Bohrloch zu ziehen, um beispielsweise einen abgenutzten oder beschädigten Bohrmeißel zu ersetzen, wonach der Bohrstrang erneut - indem Teil für Teil zusammengesetzt wird - in das Bohrloch eingeführt werden muss. Die Standzeit eines Bohrmeißels kann bei schwierigen geologischen Verhältnissen auf wenige Stunden begrenzt sein, so dass das Herausziehen, Auseinandernehmen, Zusammenfügen und Wiedereinschieben des Bohrstrangs etliche Male wiederholt werden muss, wobei die Anzahl der hierbei zu handhabenden Teile mit zunehmenden Bohrfortschritt zunimmt.

Neben der Zeit für das Handling der Einzelteile des Bohrstrangs, die möglichst kurz gehalten werden soll, ist es auch wichtig, die einzelnen Teile eines aus dem Bohrloch herausgezogenen Bohrstrangs geordnet abzulegen, so dass sie in unveränderter Reihenfolge wieder in das Bohrloch eingebracht werden können. Dies ist insbesondere dann von großer Wichtigkeit, wenn im Bohrstrang an bestimmten Positionen Zwischenstücke mit besonderen Eigenschaften oder Werkzeuge sitzen müssen.

Die Veröffentlichung B.J. Kennett et al: "The Design of an Automated Drilling Rig: RA-D", Proceedings of SPE/IADC Drilling Conference, 1. Januar 1991, offenbart ein System zum Verwalten von in ein Bohrloch einzubringenden Teilen. Die Bohrrohre werden manuell oder automatisch ausgewählt, um anschließend automatisiert in einen Bohrturm überführt zu werden. Einem Bediener werden hierzu mittels eines EDV-Systems Informationen ausgegeben, die ihm ein Eingreifen in den Prozessverlauf bei Bedarf ermöglichen. Informationen, die vom System gespeichert werden, sind Ortsangaben zu den gelagerten Teilen sowie deren Dimensionen.

Die US 6,550,547 B1 offenbart ein Rohrbefeuchtungssystem für den Einsatz in Horizontalbohrmaschinen. Dieses System transportiert abgekoppelte Rohrstücke automatisch in einen von der Bohreinrichtung beabstandeten Aufnahmebereich. Hierbei werden Informationen über den maximalen Bestand an Rohren in einem Magazin, die Anzahl von Aufnahmepositionen im Magazin und die Anzahl von im Magazin verbleibenden Rohren an eine Steuereinrichtung gegeben. Ferner wird der Status des Bohrfortschritts mittels eins Displays an eine Bedienperson ausgegeben.

Die US 2010/104401 A1 offenbart eine automatische Bohrvorrichtung, die Positionsdaten der Bohrrohre zu jedem Bohrzeitpunkt erfasst. Die Positionsdaten werden auf einem computerlesbaren Medium gespeichert. Über Bedienschnittstellen wird einer Bedienperson die Interaktion mit dem System ermöglicht. Eine Einbaureihenfolge der in das Bohrloch einzubringenden Bohrrohre wird durch ein Anforderungsmodul festgelegt. Dokument GB 2472929 A offenbart eine Lagerverwaltung, bei der alle gelagerten Verrohrungsteile mittels RFID-Transpondern individualisiert und kontaktlos per Funk erkannt sowie mittels Triangulation per Funk geortet werden können.

Der vorliegenden Erfindung liegt daher die Aufgabe zugrunde, ein Verfahren zum Verwalten der in ein Bohrloch einzubringenden Teile mit Unterstützung eines elektronischen Datenverarbeitungssystems zu schaffen, das insbesondere den Zeitaufwand für die Handhabung der einzelnen Teile eines Bohrstrangs und für das Zusammensetzen derselben verringert.

Gelöst ist diese Aufgabe durch ein Verfahren mit den Merkmalen des Anspruchs 1 und der Ansprüche 2 bis 9

Gemäß der vorliegenden Erfindung wird also ein automatisches Lagersystem vorgeschlagen, das insbesondere mit Stapeljochen und/oder Regalen und mindestens einem Regalbediengerät zum Beschicken eines Bohrloch-Beschickungssystems mit Bohrstangen, Bohrrohren, Ausschalungsrohren, Zwischenstücken, Bohrmeißeln und dergleichen und/oder zum Rücklagern von entsprechenden, aus dem Bohrloch entnommenen Teilen versehen ist. Mit Hilfe einer solchen automatischen Lager-, Zuführ- und Rücklagereinrichtung können insbesondere Bohrstangen, Bohrrohre und Ausschalungsrohre geordnet und eindeutig positioniert vorgehalten, zum richtigen Zeitpunkt dem Bohrloch-Beschickungssystem, das üblicherweise einen Pipehandler umfasst, zugeführt und bei Bedarf auf eindeutig identifizierte und speicherbare Positionen rückgelagert werden, von wo sie dann automatisch in der richtigen Reihenfolge wieder dem Bohrloch zugeführt werden können.

Hierzu wird im Rahmen der vorliegenden Erfindung ein elektronisches Datenverarbeitungssystem (EDV-System) verwendet, in welchem Informationen über den Bestand und den aktuellen Ablageort von in das Bohrloch einzubringenden Teilen, wie Bohrstangen, Bohrrohre, Ausschalungsrohre, Zwischenstücke, Bohrmeißel und dergleichen, gespeichert werden. Ferner werden im EDV-System Informationen über die Einbauposition und/oder die Einbaureihenfolge von allen in das Bohrloch eingebrachten Teilen gespeichert. Hierdurch ist das EDV-System dann in der Lage, ein erfindungsgemäß verwendetes automatisches Lager-, Zuführ- und Rücklagersystem zu steuern.

Alternativ oder zusätzlich kann das EDV-System auch lediglich einem Benutzer anzeigen, wann und von wo er welches in das Bohrloch einzubringende Teil dem Bohrloch-Beschickungssystem zuführen soll, denn das EDV-System kennt den Ablageort der entsprechenden Teile und kann dies mit einer Bohrliste abgleichen, in der festgelegt wird, welche Teile nacheinander den Bohrstrang bilden sollen.

Erfindungsgemäß ist eine Steuerung einer automatischen Lager-, Zuführ- und Rücklager-Einrichtung mit einer Anzeigefunktion kombiniert, bei der eine Bohrliste abgearbeitet wird. Der Benutzer erhält jeweils eine Anweisung, ein bestimmtes Teil von einem bestimmten Lagerort dem Bohrloch-Beschickungssystem zuzuführen, wenn dieses Teil nicht in der automatischen Lager-, Zuführ- und Rücklagereinrichtung vorgehalten wird bzw. von dieser nicht gehandhabt werden kann. Letzteres ist insbesondere bei Bohrmeißeln, Werkzeugen, Zwischenstücken und dergleichen der Fall. Diese werden dann in einem manuellen Lager vorgehalten, wobei es jedoch sehr vorteilhaft ist, dass auch deren genaue Lage erfindungsgemäß im EDV-System bekannt ist; auch bei der manuellen Bedienung wird hierdurch viel Zeit eingespart bzw., was fast noch wichtiger ist: Beim Rücklagern nach einem Herausziehen aus dem Bohrloch und Wiedereinbringen in den Bohrstrang erfolgt das Ablegen der manuell zu handhabenden Teile an einem vom EDV-System vorgegebenen und von diesem dann wieder auffindbaren Ort.

Weiter bevorzugt ist es im Rahmen der vorliegenden Erfindung, wenn das EDV-System außerdem Informationen über die weitere Verfügbarkeit von aus dem Bohrloch entnommenen Teilen speichert. Dies betrifft in erster Linie den Bohrmeißel oder ein sonstiges Bohrwerkzeug, es ist aber auch vorteilhaft, wenn das EDV-System abspeichert, wenn beispielsweise ein Gewindedefekt vorliegt und die beiden beteiligten Teile dem Bohrstrang entnommen werden müssen, um sie ersetzen oder reparieren zu können.

Dies hat insbesondere einen vorteilhaften Effekt bei einer anderen bevorzugten Weiterbildung des erfindungsgemäßen Verfahrens, nach welcher das EDV-System Nachricht gibt, wenn der Bestand von in das Bohrloch einzubringenden verfügbaren Teilen eine Reparatur von Teilen oder einen Bezug von neuen Teilen notwendig macht. So kann es dann nicht passieren, dass die Bohrmannschaft überraschend vor der Situation steht, keinen funktionsfähigen Bohrmeißel mehr vorrätig zu haben, oder nicht weiterbohren zu können, da das Bohrgestänge nicht weiter verlängert werden kann.

Weiter bevorzugt im Rahmen der vorliegenden Erfindung werden im EDV-System außerdem Informationen über neu angelieferte und/oder bestellte, in das Bohrloch einzubringende Teile gespeichert, die noch nicht im eigentlichen Bestand sind. Auch Informationen über aktuell nicht verfügbare Teile, die sich an einem Reparatur- oder Wartungsort befinden, können in diesem Rahmen im EDV-System gespeichert werden. Im Ergebnis erhält man eine Art Warenwirtschaftssystem für die in einem Bohrstrang zu verwendenden Teile, vorzugsweise unter Verknüpfung eines - wie bisher im Stand der Technik ausgestalteten - manuellen Lagers und eines automatischen Lagers bzw. einer automatischen Lager-, Zuführ- und Rücklager-Einrichtung.

Gemäß einem weiteren Aspekt der vorliegenden Erfindung wird eine Auftragsliste mit der Art und der Anzahl der in das Bohrloch voraussichtlich einzubringenden Teile erstellt und im EDV-System gespeichert. Gleichzeitig werden im EDV-System Informationen über den Bestand und den aktuellen Ablageort von in das Bohrloch einzubringenden Teilen, wie Bohrstangen, Bohrrohre, Ausschalungsrohre, Zwischenstücke, Bohrmeißel und dergleichen gespeichert sowie gegebenenfalls auch deren Verfügbarkeit. Gemäß diesem weiteren Aspekt der vorliegenden Erfindung kann das EDV-System auf Basis dieser Informationen einen Abgleich der Auftragsliste mit dem Bestand und dem aktuellen Ablageort der in das Bohrloch einzubringenden Teile durchführen. Es wird also das vorhandene Material sowie vorzugsweise auch dessen Ablageort den einzelnen Auftragspositionen der Auftragsliste zugeordnet. Dies führt vorteilhafterweise insbesondere dazu, dass das EDV-System anzeigen kann, wenn zum Abarbeiten der Auftragsliste eine Reparatur von Teilen, ein Bezug von neuen Teilen und/oder ein Umorganisieren oder Umsortieren der Lagerpositionen notwendig ist. Letzteres kann beispielsweise bedeuten, eine bestimmte von mehreren angelieferten Sendungen mit Kisten oder Paletten, die neue Teile beinhalten, vorab in das automatische Lagersystem einzubringen, um eine möglichst effiziente Abarbeitung der Auftragsliste zu gewährleisten. Gegebenenfalls kann es auch bedeuten, ein Stapeljoch- oder Regallager umzusortieren, um die Abarbeitung der Auftragsliste schnellstmöglich gewährleisten zu können.

Im Rahmen dieses weiteren Aspekts der vorliegenden Erfindung bietet es schließlich Vorteile, wenn die Auftragsliste bei Bedarf auch während der Bohrarbeiten aktualisiert werden kann, was dann gegebenenfalls zu einem Umsortieren, Umorganisieren oder einer Neubestellung von Teilen führen kann.

Ein Beispiel für die Verwirklichung eines erfindungsgemäßen Verfahrens wird im Folgenden anhand der beigefügten Zeichnungen näher beschrieben und erläutert. Es zeigen:
- Figur 1: einen Teil einer Bohrplattform für Offshore-Anwendungen, bei der ein erfindungsgemäß ausgestaltetes Verfahren implementiert ist;
- Figur 2: einen vergrößerten Ausschnitt aus Figur 1;
- Figur 3: ein Einzelteil aus Figur 2;
- Figur 4: ein Einzelteil aus Figur 3;
- Figur 5: ein Schaltbild eines EDV-Systems zur Anwendung eines erfindungsgemäßen Verfahrens.

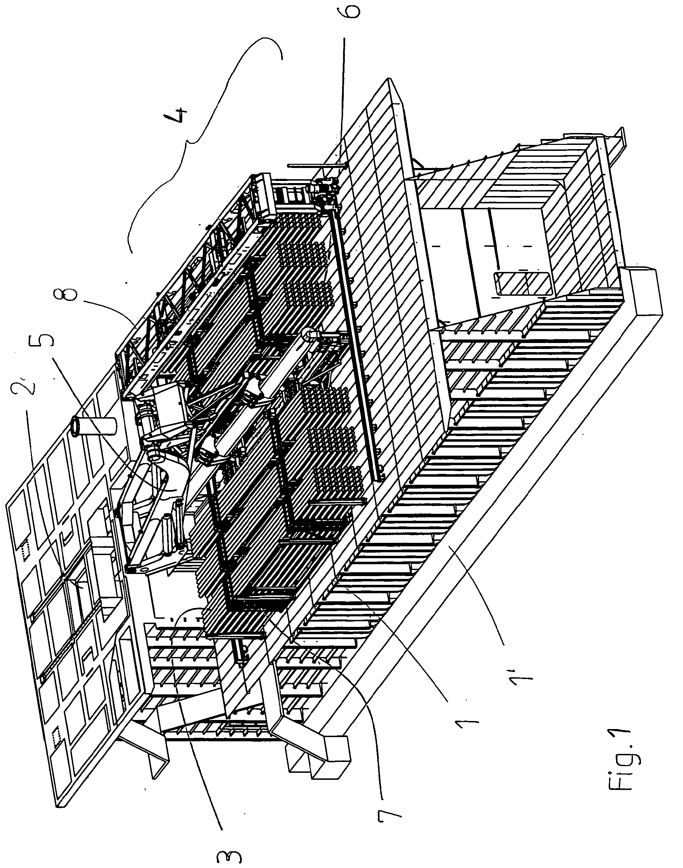

Figur 1 zeigt einen Teil einer Bohrplattform für Offshore-Anwendungen in einer schematischen perspektivischen Ansicht. Diese umfasst zwei Decks 1,1' einer Bohrplattform mit einer Öffnung 2 für einen (nicht dargestellten) Bohrstrang, der durch die Öffnung 2 hindurch vertikal nach unten durch das Wasser zur Erdbohrung geführt wird. Hierzu wird über der Öffnung 2 ein (wiederum nicht dargestellter) Bohrturm mit Halte- und Führungselementen sowie Antriebsvorrichtungen für den Bohrstrang eingesetzt. Auf dem oberen Deck 1 der Bohrplattform ist eine Vielzahl von Bohrrohren 3 in einem automatischen Stapeljochlager 4 gelagert. In diesem Stapeljochlager 4 werden die Bohrrohre 3 in horizontaler Ausrichtung gelagert. Ein Pipehandler 5 sorgt dafür, dass die Bohrrohre 3 sukzessive aus einer horizontalen Bereitstellungsposition 6 in eine vertikale, über der Öffnung 2 befindliche Position verschwenkt werden, um sie von den weiteren (nicht dargestellten) Elementen des Bohrloch-Beschickungssystems durch die Öffnung 2 in das Bohrloch absenken zu können.

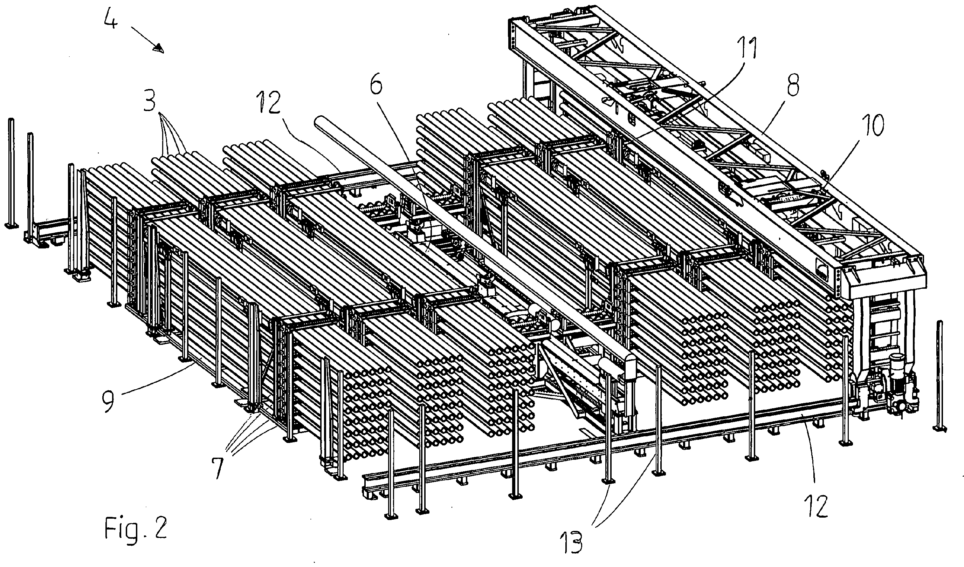

Das Stapeljochlager 4, das vorliegend als Lager-, Zuführ- und Rücklager-Einrichtung verwendet wird, ist in Figur 2 größer dargestellt. Wie hier zu erkennen ist, sind jeweils sechs Bohrrohre 3 in jeweils zwei Stapeljochen 7 zusammengefasst; dementsprechend können sie von einem Regalbediengerät 8 als "Sechser-Paket" erfasst und transportiert sowie gegebenenfalls umsortiert werden. Mehrere Stapeljochpaare 7 mit Bohrrohr-Paketen werden übereinandergestapelt, um die Lagergassen des Stapeljochlagers 4 zu bilden; vorliegend sind acht Stapeljoche 7 übereinander gestapelt und ein solcher Stapel nochmals mittels eines Containertransportgestells 9 gesichert bzw. zusammengefasst.

Das Regelbediengerät 8 besteht im Wesentlichen, wie an sich bekannt, aus einem Portalkran 10 mit einer Lasttraverse und speziell an die Stapeljoche 7 angepassten Greifelementen 11. Es ist auf zwei Fahrschienen 12 horizontal verfahrbar, um Bohrrohre 3 von jeder Position des Stapeljochlagers 4 aus an die Bereitstellungsposition 6 bringen und von dort rücklagern zu können. Ein nur angedeuteter Schutzzaun 13 sichert das automatische Stapeljochlager 4 gegen unberechtigten Zutritt.

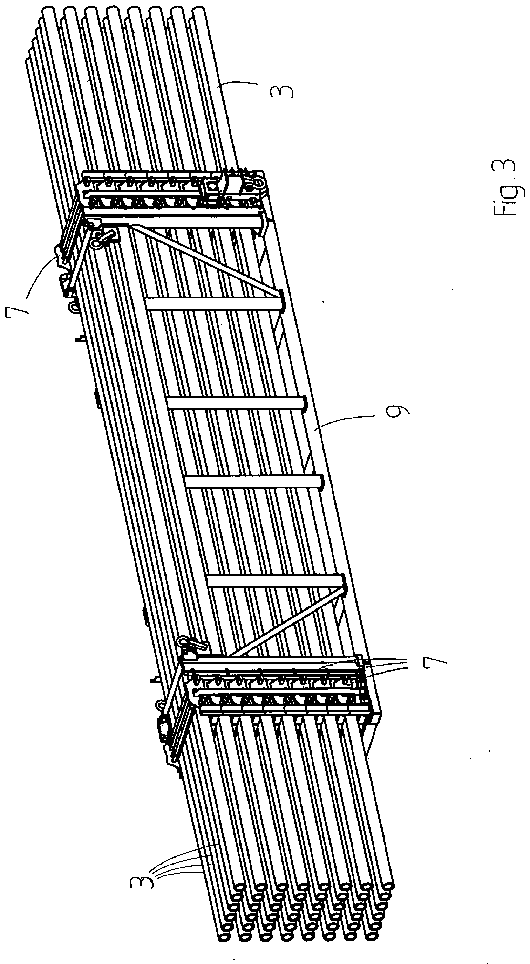

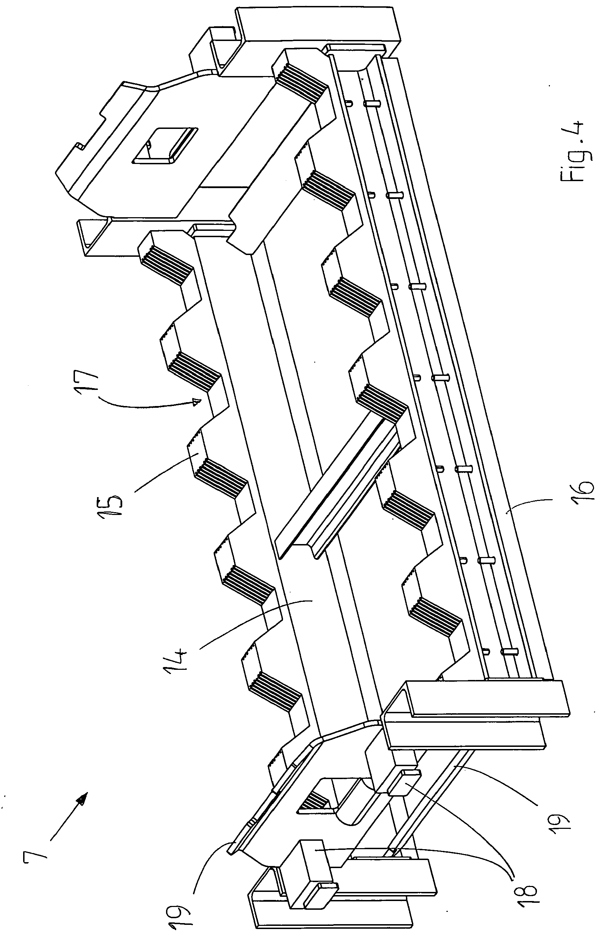

Die Figuren 3 und 4 zeigen die Einzelteile des Stapeljochlagers 4 im Detail, wobei Figur 4 ein einzelnes Stapeljoch 7 in einer perspektivischen Ansicht zeigt. Dieses Stapeljoch 7 ist an sich bekannt, beispielsweise aus der DE 20 2010 002 573 U1. Die hier verwendeten Stapeljoche 7 sind jedoch für den Einsatz im vorliegenden Verfahren angepasst, indem an Querträgern 14 oberseitig jeweils eine mit prismenförmigen Nocken versehene Kunststoffleiste 15 und unterseitig eine Klemmleiste 16 angebracht sind. Die Klemmleiste 16 wirkt auf ein unterhalb des dargestellten Stapeljochs 7 angeordnetes Stapeljoch mit Bohrrohren, während die Kunststoffleiste 15 Kerben 17 bildet, die die einzelnen Bohrrohre 3 positionsgenau im Stapeljoch 7 halten. Stirnseitig umfassen die Stapeljoche 7 Aufnahmen 18 für die Greifelemente 11 des Regalbediengeräts 8 sowie Einführschrägen 19 für das lagegenaue Aufeinandersetzen von mehreren Stapeljochen 7.

Figur 3 ist die perspektivische Ansicht eines Jochstapels mit acht Stapeljochpaaren 7, die jeweils sechs Bohrrohre 3 zusammenfassen. Dieser Jochstapel ist durch ein Container-Transportgestell 9 zusätzlich gesichert und bildet eine Lagereinheit. Durch die (in dieser Darstellung nicht sichtbaren) Kunststoffleisten 15 in den Stapeljochen 7 sind die Bohrrohre 3 exakt positioniert, so dass ein erfindungsgemäßes EDV-System die hier dargestellten Bohrrohre 3 einer Matrix mit sechs Spalten und acht Zeilen eindeutig zuordnen kann. Durch Abheben eines Stapeljochpaars, gegebenenfalls mit vorherigem Umsortieren der Reihenfolge, um an ein unten liegendes Stapeljochpaar zu kommen, Transportieren desselben zur Bereitstellungsposition 6 und Vereinzeln an der Bereitstellungsposition kann jedes einzelne Bohrrohr 3 ausgewählt und dem Bohrloch-Beschickungssystem, hier also dem Pipehandler 5, zugeführt werden. Auch das Rücklagern an eine beliebige definierte Position im Stapeljochlager 4 ist auf diese Art und Weise computergesteuert möglich.

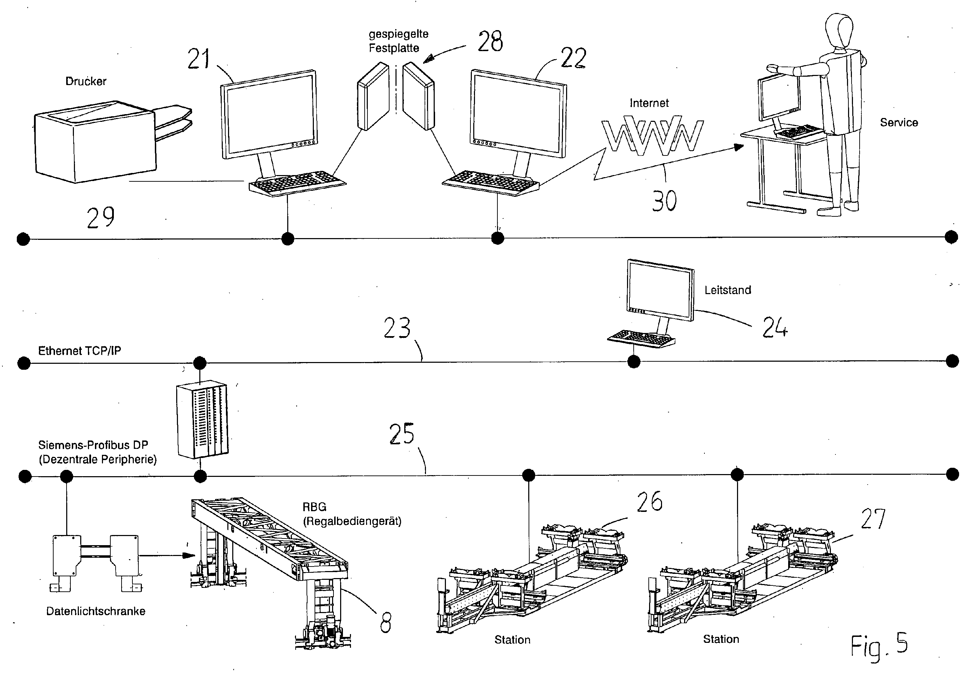

Figur 5 zeigt schließlich ein schematisches Diagramm eines EDV-Systems, das mit dem Stapeljochlager 4 der vorherigen Figuren vernetzt ist und ein erfindungsgemäß ausgestaltetes Verfahren durchführt. Ein Server 21 und ein als Ersatz vorgehaltener Stand-by-Server 22 bilden die Zentrale des EDV-Systems. Sie stehen in einem geschützten Raum und sind via Netzkabel 23 mit einem Terminal 24 verbunden, welches vor Ort auf der Bohrplattform 1 angeordnet ist und die Bedienung des Systems ermöglicht. Über einen Datenbus 25 werden das Regalbediengerät 8 gesteuert und von dort Daten empfangen, um den aktuellen Bestand an Bohrrohren 3 im Stapeljochlager 4 mitzuprotokollieren. Weitere Verbindungen über den Datenbus 25 bestehen mit zwei Abstellplätzen 26 und 27, von denen die (hier nicht dargestellte) Bereitstellungsposition 6 für den Pipehandler 5 wahlweise, insbesondere abwechselnd beschickt werden kann. Das Arbeiten mit zwei Abstellplätzen 26 und 27 für Stapeljochpaare mit Inhalt beschleunigt das Handling der Bohrrohre 3 und vermeidet etwaige Verzögerungen durch die Laufzeiten des Regalbediengeräts 8. Lagerplätze, in denen manuell zu handhabende Teile, wie Bohrmeißel, Zwischenstücke und dergleichen mehr oder weniger geordnet lagern, sind in Figur 5 nicht dargestellt, da sie nicht in die Datenleitungen eingebunden sind.

Die Anbindung an den Datenbus 25 und somit an den Server 21 dient dazu, dass der Server 21 den jeweils aktuellen Bestand an in das Bohrloch einzubringenden Teilen kennt und am Terminal 24 entsprechend anzeigen kann. Zur Sicherung der entsprechenden Daten sind der Server 21 und der Stand-by-Server 22 mit gespiegelten Festplatten 28 sowie mit einem Drucker 29 verbunden. Gegebenenfalls ist der Server 21 außerdem an das Internet 30 angeschlossen, so dass eine Fernwartung oder eine Problembehandlung von eventuell auftretenden Problemen vom Systemhersteller Online geleistet werden kann.

Das Terminal 24 arbeitet beim Anwenden des erfindungsgemäßen Verfahrens eine Liste ab, in der die einzelnen, eindeutig bezeichneten und positionierten Bohrrohre in einer vorgegebenen Reihenfolge sowie gegebenenfalls die Position von Zwischenstücken und Werkzeugen gelistet sind. Positionen dieser Liste, die Bohrrohre 3 betreffen, welche im Stapeljochlager 4 lagern, werden durch automatische Steuerung des Regalbediengeräts 8 automatisch dem Pipehandler 5 zugeführt, während Positionen in der Liste, die Teile betreffen, welche in den manuellen Lagerplätzen 26 und 27 gelagert sind, einen Stop in der Abarbeitung sowie das Generieren einer Anweisung an den Bediener des Terminals 24 erzeugen, die entsprechenden Teile dem Bohrloch-Beschickungssystem zuzuführen und den Vollzug dieser Anweisung zu quittieren.

Soweit es notwendig ist, den Bohrstrang aus dem Bohrloch zu entnehmen und hierbei sukzessive in seine Einzelteile zu zerlegen, arbeitet der Server 21 die Liste rückwärts ab. Beim anschließenden Wiederanlaufen der Bohrung ist es dann äußerst vorteilhaft, dass die Einzelteile sämtlich definiert abgelegt sind und der Server 21 die einzelnen Positionen kennt.

Das vorliegende Ausführungsbeispiel ist darüber hinaus solcherart ausgestaltet, dass der Server 21 die Position von sämtlichen einzelnen Teilen kennt, die zum Einbringen in das Bohrloch vorgesehen sind, also zum Beispiel auch von Bohrrohren, die an einem anderen Ort auf der Bohrplattform oder Bohrinsel gelagert sind und beispielsweise noch nicht in das automatische Stapeljochlager 4 verbracht worden sind.

Das erfindungsgemäße Verfahren bietet auch Vorteile, wenn Förderrohre in das Bohrloch eingebracht werden, da im EDV-System dann auch noch nach Jahren die Information verfügbar ist, an welcher Position des Förderstrangs exakt welches Bauteil sitzt.

## Patentansprüche

1. Verfahren zum Verwalten von Bohrgestängen, Bohrwerkzeugen, Bohrloch-Verrohrungen und dergleichen für Erdbohrungen zum Erschließen von Lagerstätten fossiler Brennstoffe oder von Erdwärmespeichern, wobei in einem elektronischen Datenverarbeitungssystem (21, 22, 23, 24, 25, 28), im Folgenden EDV-System, Informationen über den Bestand und den aktuellen Ablageort von in das Bohrloch einzubringenden Teilen, wie Bohrstangen, Bohrrohre (3), Ausschalungsrohre, Zwischenstücke, Bohrmeißel und dergleichen, gespeichert werden,
und wobei außerdem Informationen über die Einbauposition und/oder Einbaureihenfolge von allen in das Bohrloch eingebrachten Teilen im EDV-System (21, 22, 23, 24, 25, 28) gespeichert werden,
so dass das EDV-System (21, 22, 23, 24, 25, 28) einem Benutzer über ein Terminal (24) anzeigen kann, wann und von wo er welches Teil einem Bohrloch-Beschickungssystem (5) zuführen soll und/oder wohin er welches Teil rücklagern soll, wenn es aus dem Bohrloch entnommen werden muss, und/oder
so dass das EDV-System eine automatische Lager-, Zuführ- und Rücklager-Einrichtung (4) steuern kann,
**dadurch gekennzeichnet,**
**dass** das EDV-System die Verwaltung einer automatischen Lager-, Zuführ- und Rücklager-Einrichtung (4) und eines manuellen Lagers verknüpft und
**dass** das EDV-System (21, 22, 23, 24, 25, 28) eine Bohrliste abarbeitet, wobei es bei in das Bohrloch einzubringenden Teilen (3), die in der automatischen Lager-, Zuführ- und Rücklager-Einrichtung (4) gelagert sind, die Einrichtung (4) steuert, um die Teile dem Bohrloch oder einem Bohrloch-Beschickungssystem (5) automatisch zuzuführen, und wobei es bei in das Bohrloch einzubringenden Teilen, die nicht in der automatischen Lager-, Zuführ- und Rücklager-Einrichtung (4) gelagert sind, sondern in dem manuellen Lager vorgehalten werden, eine Anzeige (24) für den Benutzer generiert, welches Teil er von wo dem Bohrloch-Beschickungssystem (5) zuführen soll, und auf eine Quittierung dieser Anzeige wartet, um die Bohrliste weiter abzuarbeiten.

2. Verfahren nach Anspruch 1,
**dadurch gekennzeichnet,**
**dass** eine Teilmenge der in das Bohrloch einzubringenden oder aus diesem entnommenen Teile (3) in einer automatischen Lager-, Zuführ- und Rücklager-Einrichtung (4) gelagert wird,
und **dass** Informationen über den Bestand und den Ablageort sowohl von den in der automatischen Lager-, Zuführ- und Rücklager-Einrichtung (4) gelagerten Teilen (3) als auch von Teilen, die nicht in der dieser Einrichtung lagern oder dort abgelegt werden, im EDV-System (21, 22, 23, 24, 25, 28) gespeichert werden.

3. Verfahren nach einem der Ansprüche 1 oder 2,
**dadurch gekennzeichnet,**
**dass** das EDV-System (21, 22, 23, 24, 25, 28) außerdem Informationen über die weitere Verfügbarkeit von aus dem Bohrloch entnommenen Teilen speichert.

4. Verfahren nach mindestens einem der Ansprüche 1 bis 3,
**dadurch gekennzeichnet,**
**dass** das EDV-System (21, 22, 23, 24, 25,28) anzeigt, wenn der Bestand von in das Bohrloch einzubringenden verfügbaren Teilen eine Reparatur von Teilen oder einen Bezug von neuen Teilen notwendig macht.

5. Verfahren nach mindestens einem der Ansprüche 1 bis 4,
**dadurch gekennzeichnet,**
**dass** außerdem Informationen über neu angelieferte und/oder bestellte, in das Bohrloch einzubringende Teile, die noch nicht im Bestand sind, und/oder Informationen über aktuell nicht im Bestand vorhandene Teile, die sich an einem Reparatur- oder Wartungsort befinden, im EDV-System (21, 22, 23, 24, 25, 28) gespeichert werden.

6. Verfahren nach mindestens einem der Ansprüche 1 bis 5,
**dadurch gekennzeichnet,**
**dass** als automatische Lager-, Zuführ- und Rücklager-Einrichtung (4) ein automatisches Lagersystem mit Stapeljochen (7) sowie mit mindestens einem Regalbediengerät (8) verwendet wird.

7. Verfahren nach mindestens einem der Ansprüche 1 bis 6,
**dadurch gekennzeichnet,**
**dass** eine Auftragsliste mit der Art und der Anzahl der in das Bohrloch voraussichtlich einzubringenden Teile im EDV-System (21, 22, 23, 24, 25, 28) gespeichert wird,
und **dass** das EDV-System (21, 22, 23, 24, 25, 28) einen Abgleich der Auftragsliste mit dem Bestand und dem aktuellen Ablageort der in das Bohrloch einzubringenden Teile durchführt und anzeigt, wenn zum Abarbeiten der Auftragsliste eine Reparatur von Teilen, ein Bezug von neuen Teilen und/oder ein Umorganisieren oder Umsortieren der Lagerpositionen notwendig ist.

8. Verfahren nach Anspruch 7,
**dadurch gekennzeichnet,**
**dass** die Auftragsliste bei Bedarf während der Bohrarbeiten aktualisiert wird.

9. Verfahren nach einem der Ansprüche 7 oder 8,
**dadurch gekennzeichnet,**
**dass** in der Auftragsliste auch die Reihenfolge der in das Bohrloch voraussichtlich einzubringenden Teile berücksichtigt wird.

## Claims

1. Method of managing drill rods, drilling tools, borehole pipework and the like for ground drilling to exploit fossil fuel deposits or geothermal energy reserves, wherein information relating to the stock and the current storage location of components to be introduced into the borehole, such as drill rods, drilling pipes (3), lining pipes, intermediate pieces, drill bits and the like, are stored in an electronic data processing system (21, 22, 23, 24, 25, 28), abbreviated to EDP system below,
and wherein, in addition, information relating to the installation position and/or installation sequence of all components introduced into the borehole are stored in the EDP system (21, 22, 23, 24, 25, 28),
so that the EDP system (21, 22, 23, 24, 25, 28) is able to indicate to a user *via* a terminal (24) when and from which location he should supply which component to a borehole supply system (5) and/or to which location he should return which component to storage when it needs to be removed from the borehole, and/or
so that the EDP system is able to control an automatic storage, supply and re-storage device (4),
**characterised in that**
the EDP system combines the management of an automatic storage, supply and re-storage device (4) and the management of a manual store and
the EDP system (21, 22, 23, 24, 25, 28) works through a drilling list, wherein in the case of components (3) to be introduced into the borehole that are stored in the automatic storage, supply and re-storage device (4) it controls the device (4) in order to supply the components automatically to the borehole or to a borehole supply system (5), and wherein in the case of components to be introduced into the borehole that are not stored in the automatic storage, supply and re-storage device (4) but are kept in the manual store it generates a display (24) which indicates to the user which component from which location he is to supply to the borehole supply system (5) and waits for an acknowledgement of that display before continuing to work through the drilling list.

2. Method according to claim 1,
**characterised in that**
some of the components (3) that are to be introduced into the borehole or that are removed therefrom are stored in an automatic storage, supply and re-storage device (4),
and information relating to the stock and the storage location both of the components (3) stored in the automatic storage, supply and re-storage device (4) and of components that are not in storage **in that** device or deposited therein are stored in the EDP system (21, 22, 23, 24, 25, 28).

3. Method according to either one of claims 1 and 2,
**characterised in that**
the EDP system (21, 22, 23, 24, 25, 28) also stores information relating to the further availability of components removed from the borehole.

4. Method according to at least one of claims 1 to 3,
**characterised in that**
the EDP system (21, 22, 23, 24, 25, 28) indicates whether the stock of components available for introduction into the borehole makes it necessary for components to be repaired or for new components to be obtained.

5. Method according to at least one of claims 1 to 4,
**characterised in that**
information relating to newly delivered and/or ordered components to be introduced into the borehole that are not yet in stock and/or information relating to components not currently in stock that are located in a repair or maintenance location are also stored in the EDP system (21, 22, 23, 24, 25, 28).

6. Method according to at least one of claims 1 to 5,
**characterised in that**
as automatic storage, supply and re-storage device (4) there is used an automatic storage system having stacking cradles (7) and having at least one shelf-servicing apparatus (8).

7. Method according to at least one of claims 1 to 6,
**characterised in that**
a task list containing the type and number of the components expected to be introduced into the borehole is stored in the EDP system (21, 22, 23, 24, 25, 28),
and the EDP system (21, 22, 23, 24, 25, 28) compares the task list with the stock and the current storage location of the components to be introduced into the borehole and indicates whether, in order to work through the task list, it is necessary to repair components, to order new components and/or to reorganise or re-sort the storage positions.

8. Method according to claim 7,
**characterised in that**
the task list is updated as necessary during the drilling works.

9. Method according to either one of claims 7 and 8,
**characterised in that**
the sequence of the components expected to be introduced into the borehole is also taken into consideration in the task list.

## Revendications

1. Procédé de gestion de trains de forage, d'outils de forage, de cuvelages de trous forés, et d'objets similaires dédiés à des puits de forage, en vue de l'exploration de sites de combustibles fossiles ou de sites d'accumulation d'énergie géothermique,
des informations relatives à l'inventaire et au lieu effectif de dépôt d'éléments devant être introduits dans le trou foré, tels que des tiges de forage, des tubulures de forage (3), des tubulures de coffrage, des pièces intermédiaires, des trépans de forage et pièces analogues, étant mémorisées dans un système électronique (21, 22, 23, 24, 25, 28) de traitement de données, ci-après désigné par « système EDV »,
et des informations, relatives à l'emplacement d'intégration et/ou à l'ordre séquentiel d'intégration de tous les éléments introduits dans ledit trou foré, étant par- ailleurs mémorisées dans ledit système EDV (21, 22, 23, 24, 25, 28),
de telle sorte que ledit système EDV (21, 22, 23, 24, 25, 28) puisse indiquer à un utilisateur, par l'intermédiaire d'un terminal (24), l'instant auquel et l'endroit à partir duquel il doit délivrer un élément à un système (5) d'approvisionnement de trous forés, et la nature dudit élément, et/ou l'endroit vers lequel il doit remettre en stock un élément, et la nature dudit élément lorsqu'il doit être enlevé du trou foré, et/ou de telle sorte que ledit système EDV puisse commander un dispositif automatique (4) d'entreposage, d'amenée et de remise en stock,
**caractérisé par le fait**
**que** le système EDV combine la gestion d'un dispositif automatique (4) d'entreposage, d'amenée et de remise en stock, et d'un entrepôt de stockage manuel ; et
**que** ledit système EDV (21, 22, 23, 24, 25, 28) élabore une liste de forages, sachant que, en présence d'éléments (3) qui doivent être introduits dans le trou foré et sont stockés dans le dispositif automatique (4) d'entreposage, d'amenée et de remise en stock, il commande ledit dispositif (4) afin de délivrer automatiquement lesdits éléments audit trou foré, ou à un système (5) d'approvisionnement de trous forés ; et sachant que, en présence d'éléments qui doivent être introduits dans ledit trou foré et ne sont pas stockés dans ledit dispositif automatique (4) d'entreposage, d'amenée et de remise en stock, mais sont en revanche tenus en réserve dans ledit entrepôt de stockage manuel, il engendre une notification affichée (24) indiquant, à l'utilisateur, quel élément il doit délivrer audit système (5) d'approvisionnement de trous forés, et à partir de quel endroit, puis attend une confirmation de réception de cette notification affichée, en vue de poursuivre l'élaboration de ladite liste de forages.

2. Procédé selon la revendication 1,
**caractérisé par le fait**
**qu'**une quantité partielle des éléments (3) devant être introduits dans le trou foré, ou enlevés de ce dernier, est stockée dans un dispositif automatique (4) d'entreposage, d'amenée et de remise en stock ;
et **que** des informations relatives à l'inventaire et au lieu de dépôt, tant des éléments (3) stockés dans ledit dispositif automatique (4) d'entreposage, d'amenée et de remise en stock, que d'éléments qui ne sont pas stockés dans ce dispositif, ou y sont déposés, sont mémorisées dans le système EDV (21, 22, 23, 24, 25, 28).

3. Procédé selon l'une des revendications 1 ou 2,
**caractérisé par le fait**
**que** le système EDV (21, 22, 23, 24, 25, 28) mémorise, en outre, des informations relatives à la disponibilité ultérieure d'éléments enlevés du trou foré.

4. Procédé selon au moins l'une des revendications 1 à 3,
**caractérisé par le fait**
**que** le système EDV (21, 22, 23, 24, 25, 28) indique l'instant auquel l'inventaire d'éléments disponibles, devant être introduits dans le trou foré, nécessite une réparation d'éléments ou une acquisition d'éléments neufs.

5. Procédé selon au moins l'une des revendications 1 à 4,
**caractérisé par le fait**
**que** des informations relatives à des éléments nouvellement livrés et/ou commandés, devant être introduits dans le trou foré et non encore inclus dans l'inventaire, et/ou des informations relatives à des éléments effectivement non présents dans ledit inventaire, et situés dans un lieu de réparation ou de maintenance, sont par ailleurs mémorisées dans le système EDV (21, 22, 23, 24, 25, 28).

6. Procédé selon au moins l'une des revendications 1 à 5,
**caractérisé par le fait**
**qu'**un système de stockage automatique doté d'étriers d'empilement (7), ainsi que d'au moins un appareil (8) de manutention d'étagères, est utilisé en tant que dispositif automatique (4) d'entreposage, d'amenée et de remise en stock.

7. Procédé selon au moins l'une des revendications 1 à 6,
**caractérisé par le fait**
**qu'**une liste de tâches, incluant le type et le nombre des éléments devant être prévisionnellement introduits dans le trou foré, est mémorisée dans le système EDV (21, 22,23,24,25,28);
et **que** ledit système EDV (21, 22, 23, 24, 25, 28) effectue un rapprochement de la liste des tâches avec l'inventaire et le lieu effectif de dépôt des éléments devant être introduits dans ledit trou foré, et indique l'instant auquel une réparation d'éléments, une acquisition d'éléments neufs, et/ou une réorganisation ou un nouveau classement des emplacements de stockage, s'avère(nt) nécessaire(s) en vue de l'élaboration de ladite liste des tâches.

8. Procédé selon la revendication 7,
**caractérisé par le fait**
**que** la liste des tâches est actualisée, si besoin est, au cours des opérations de forage.

9. Procédé selon l'une des revendications 7 ou 8,
**caractérisé par le fait**
**que** l'ordre de succession des éléments, devant être prévisionnellement introduits dans le trou foré, est lui aussi pris en compte dans la liste des tâches.
